# EUROPEAN PATENT APPLICATION

(11) **EP 4 722 963 A1**
(43) Date of publication of application: **08.04.2026**
(21) Application number: 24204247.1
(22) Date of filing: 02.10.2024
(51) Int. Cl.: G06F 21/57, G06F 21/74, H04L 9/40, G06F 21/75

(54) **CONFIDENTIALITY-PRESERVING FLEET MANAGEMENT**

(71) Applicant: ABB SCHWEIZ AG, 5400 Baden (CH)
(72) Inventor: GAMER, Thomas, 68782 Brühl (DE); KOHNHAEUSER, Florian, 64560 Riedstadt (DE); GOETTEL, Christian, 5442 Fislisbach (CH)
(74) Representative: Maiwald GmbH

(57) **Abstract**

There is disclosed a method for confidentiality-preserving fleet management for automation equipment in industrial plants. The method comprises providing a platform comprising a fleet management for automation equipment application within a trusted execution environment, TEE, wherein the fleet management for automation equipment application comprises a calculation module and is associated with a first company. The method further comprises receiving first data indicative of information about a first fleet of automation equipment associated with a second company into the fleet management for automation equipment application within the trusted execution environment. The method further comprises processing the first data by using the calculation module. And the method further comprises outputting from the trusted execution environment a result of the processing.

## Description

### FIELD OF THE INVENTION

The invention relates to confidentiality-preserving fleet management.

### BACKGROUND

Confidential computing is a concept mainly used for intellectual property (IP) protection of applications or to preserve the confidentiality of data by running sensitive applications or processing sensitive data within a trusted execution environment (TEE) with isolated processing and encrypted memory. This requires dedicated hardware like ARM TrustZone for embedded, mobile and server devices or Intel SGX for server devices, for example, and can be combined with further technologies such as remote attestation. Confidential computing is primarily being used by cloud providers such as Amazon, Google, IBM, and Microsoft, as well as for Digital Rights Management (DRM) solutions of streaming services, such as Netflix, where code and data typically originate from the same source.

In industrial use cases involving multiple parties with (partially) different business interests, collaboration and data sharing is hard to achieve due to confidentiality reasons of the data, where data can serve multiple purposes, such as fleet management and asset management.

A mine, for instance, might be equipped with trucks from different vendors - even more so in the current transition phase to electrical mines with fully electric trucks, traditional diesel trucks, and hybrid diesel-based trucks with additional smaller batteries. A party might want to provide fleet management services for such heterogeneous mobile mining equipment, but truck vendors are likely reluctant to share relevant data like position or payload openly, especially if such data might be usable for asset management, too, which might be provided by truck vendors directly.

Hence, there is room and need for improvement regarding the collaboration and data sharing among multiple parties in industrial use cases.

### SUMMARY

In view of the above, it is an object of the present disclosure to overcome at least part of the drawbacks available regarding the collaboration and data sharing among multiple parties in industrial use cases.

Therefore, to address one or more of these drawbacks, there is provided, in a first aspect, a method for confidentiality-preserving fleet management for automation equipment in industrial plants. The method comprises providing a platform comprising a fleet management for automation equipment application within a trusted execution environment, wherein the fleet management application comprises a calculation module and is associated with a first company. The method further comprises receiving first data indicative of information about a first fleet of automation equipment associated with a second company at the fleet management for automation equipment application within the trusted execution environment. The method further comprises processing the first data by using the calculation module. And the method further comprises outputting from the trusted execution environment a result of the processing.

It shall be noted that by automation equipment, any movable or none-movable equipment of any size may be meant. For example, the automation equipment may be a fleet of trucks or a fleet of devices. The fleet management for automation equipment application, also referred to as fleet management application in the following, represents an application for fleet management for automation equipment. Further, the fleet management application may be a software application, which may process input data for managing one or more fleet of automation equipment from one or more companies. Moreover, the calculation module may be any entity to be applied on input data and/or to receive input data for calculation purposes. For example, the calculation module may be an algorithm into which data are input to be calculated. The association with a first company may comprise that the first company provides the fleet management application and the calculation module. For example, the first company may have developed or coded the fleet management application and the calculation module. Thus, the first company may be understood as an application provider.

Further, the first data may comprise the information about the first fleet of automation equipment. For example, in case the first fleet of automation equipment may be a first fleet of trucks, the information may comprise information about each truck among the first fleet of trucks. Such information may be, for example, vehicle-specific information like the vehicle type, the vehicle history, the vehicle's travelled kilometres, the vehicle's type of engine, a vehicle's battery state, a vehicle battery's charging rate, etc. Additionally, or alternatively, such information may be, for example, load-specific like information about the load transported by the truck, a time period required for unloading the load from the truck, or safety measures to be considered with a specific load. Moreover, for example, in case the first fleet of automation equipment may be a first fleet of electronic devices installed at an industrial plant, for example along a same production line, the information may comprise information about data acquired by the electronic devices, data processed by the electronic devices and data output by the electronic devices. Further, the information may comprise information about an energy consumption of the electronic devices, a predicted maintenance of the electronic devices or any errors or alarms detected at the electronic devices. Furthermore, the expression that the first fleet of automation equipment is associated with the second company may also comprise that the first fleet of automation equipment is provided or owned by the second company. The first data may be provided or sent/transmitted by the second company, for example in case the second company is the owner of the first fleet of automation equipment. The second company may be understood as a data provider for example. Moreover, processing the first data by using the calculation module may comprise that the first data are input to/into the calculation module, for example in case the calculation module includes an algorithm. The first data may be understood as first input data. By using the calculation module may also be understood as applying the calculation module on the first data. Outputting from the trusted execution environment also comprises outputting from the calculation module and the fleet management application. The fleet management for automation equipment application receiving (the first) data may be understood in the (first) data being input to/into the fleet management for automation equipment application (and for example to/into the calculation module).

According to several examples of the present disclosure, the platform may be provided by the first company or the second company. However, it shall be noted that the method according to the first aspect also comprise that the platform may be provided by a company different from the first company and the second company. I.e., according to several examples of the present disclosure, the platform may be provided by a further company, which may be understood as a platform provider. Thus, the method according to the first aspect enables participation of three different types of parties, i.e. an application provider (first company for example), a data provider (second company for example) and a platform provider (further company for example).

Hence, according to several examples of the present disclosure, the providing the platform may comprise providing the platform by a further company, different from the first company and the second company.

Accordingly, the first company and the second company may use the platform with higher trust or less prejudices, since a further company, which may represent an independent, neutral or unbiased participant, may be responsible for the platform.

The method according to the first aspect is advantageous in that it may participate in enabling to combining code and data originating from different parties or companies in a secure way. It is further provided technical means to foster and ensure trust between multiple parties, on top of contractual or commercial agreements. Moreover, there is achieved a reduced attack surface as both data and application including an algorithm or model for example are protected by the trusted execution environment. It is further enabled for code and data authenticity and integrity verification through remote and local trusted execution environment attestation. Hence, there is provided a new offering for confidentiality-preserving fleet management for automation equipment in industrial plant based on decentralized confidential data analytics, and it is avoided leakage of IP of a protected algorithm or model. Furthermore, there is enabled protection for investments including equipment uptime and partners, even in compromised or third-party environments. There is further enabled an easy sharing or provisioning of new software services for customers, secure-by-design, since parties may control their code or data for example. There is further enabled that the platform may be provided by a platform provider party, wherein two other parties might be the application provider party and the data provider party. Hence, it is enabled that an independent, neutral or unbiased party runs or provides the platform for multi-party fleet management using trusted computing. Hence, trust of the other two parties, i.e. the application provider party and the data provider party, may be even further increased. In particular, trust of the application provider party and the data provider party would be further increased, since the application provider party and the data provider party would rather trust the system, i.e. the provided platform, than potentially the platform provider party.

According to several examples of the present disclosure, the method may further comprise receiving second data indicative of information about a second fleet of automation equipment associated with a third company at the fleet management application within the trusted execution environment. The method may further comprise processing the second data by using the calculation module. The processing the second data may comprises at least one of:
- processing the second data separately from the first data,
- commonly processing the first data and the second data, and
- processing the second data depending on the first data.

The method may further comprise outputting from the trusted execution environment a result of the processing of the first data and the second data.

It shall be noted that the examples and explanations given above with reference to the first fleet of automation equipment and to the second company may also hold true for the second fleet of automation equipment and for the third company, accordingly. The second data may be understood as second input data. Processing the second data separately from the first data may comprise that the first fleet of automation equipment is managed separately or independently from the second fleet of automation equipment. Commonly or jointly processing the first data and the second data may comprise that the first data and the second data are processed simultaneously, in relation to each other or together, and that one result will be obtained, which will be applied for both the first fleet of automation equipment and the second fleet of automation equipment. For example, trucks of the first and second fleets of automation equipment are scheduled for loading or unloading in a certain order. Processing the second data depending on the first data may comprise, for example, that the first data are processed first and that the second data are processed thereafter. For example, available truck loading and unloading capabilities are first scheduled for the trucks of the first fleet, and the remaining truck loading and unloading capabilities are then scheduled for the trucks of the second fleet.

Hence, secure participation for several third-parties is enabled. Thus, an overall acceptability among the participating parties may increase. Further, still several different ways of data processing are enabled, so an optimal solution across all participating parties may be found.

According to several examples of the present disclosure, the first data may comprise data for one or more automation equipment among the first fleet of automation equipment, wherein the second data may comprise data for one or more automation equipment among the second fleet of automation equipment.

It shall be noted that the automation equipment of the first fleet may be different in type from the automation equipment of the second fleet. For example, the automation equipment of the first fleet may comprise trucks, wherein the automation equipment of the second fleet may comprise electronic devices or vehicle for loading and unloading trucks.

Hence, different stages and corresponding companies or parties in a supply chain may be considered.

According to several examples of the present disclosure, the calculation module may be at least one of a fleet management algorithm, a mathematical model for fleet management, a physical model for fleet management and a machine learning/artificial intelligence, ML/Al, model for fleet management.

It shall be noted that the actual configuration and performance of the calculation module is not a key feature of the present disclosure. Rather, it shall be noted that different calculation processes may be applied.

Hence, it is enabled to continuously improve or modify the used calculation module.

According to several examples of the present disclosure, the method may further comprise at least one of:
- building the platform on a software framework and configuring the software framework that outputs from the trusted execution environment are results obtained from the fleet management application;
- building the platform on a software framework that is designed to allow as output from the platform only results from the processing;
- building the platform on a software framework that comprises means for preventing reversible algorithms or models to be executed by the software framework; and
- building the platform on a software framework that comprises means for preventing reverse engineering algorithms or models by the software framework.

It shall be noted that building the platform on such software framework may be to prevent an adversary from understanding, by use of reverse engineering, an employed algorithm or model in the application, for example to steal IP and copy the algorithm or model. It shall further be noted that the trusted execution environment may only output results obtained from the calculation module, so that any potentially malicious output may be avoided. Moreover, the means for preventing reverse engineering algorithms or models to be executed may be means that are equipped to the input interface and/or the output interface of the trusted execution environment, and may be, for example input protection modules and output protection modules. All inputs to the trusted execution environment may need to go through such input protection modules at the input interface. All outputs from the trusted execution environment may need to go through such output protection modules at the output interface. Examples for such input protection modules may be input range limiting, input rate limiting, verification of source, verification of input frequency, encoding semantics filter or input value blocker. Examples for such output protection modules may be output rate limiting, fuzzifying outputs, output encryption.

Hence, there is also prevented the execution of "reversible algorithms and models", for example, coming from a rogue application provider who wants to obtain access to the raw data input into the application and/or underlying the application. Thus, security for both application provider and data provider(s) is even further increased.

According to several examples of the present disclosure, the method may further comprise encrypting a result obtained from the processing, wherein the outputting may comprise outputting a result from the encrypting.

It shall be noted that a party, that is intended to receive a certain encrypted output, may comprise a corresponding decryption key.

Hence, security for both application provider and data provider(s) is even further increased.

According to several examples of the present disclosure, the method may further comprise using a smart contract that immutably documents the receiving, the processing and/or the outputting.

It shall be noted that the documented receiving, processing and outputting may be stored at a memory provided within the trusted execution environment and/or may be transmitted to participating parties.

Hence, acceptability and traceability for both application provider and data provider(s) is even further increased.

According to several examples of the present disclosure, the method may further comprise using zero knowledge proofs, that verify a priori program code of the fleet management application, of the calculation module, of the first data and/or of the second data without publishing the contents.

Hence, acceptability and trustworthiness for both application provider and data provider(s) is even further increased.

According to several examples of the present disclosure, the method may further comprise using nested trusted execution environments inside the trusted execution environment, wherein the calculation module is within the interior trusted execution environment of the nested trusted execution environments.

It shall be noted that by nested TEE inside the TEE, it is meant for example that the nesting could be a virtual machine within a virtual machine, or an application within a virtual machine. From a technical point of view, both a (trusted) application (i.e., an enclave for example) and a virtual machine are types of TEEs.

Hence, acceptability and trustworthiness for both application provider and data provider(s) is even further increased.

According to several examples of the present disclosure, the method may further comprise incorporating a trigger module associated with a predetermined trigger criterion into the fleet management application. The trigger module may be associated with values of a predetermined key performance indicator, KPI, for a process related to at least one of the second company and the third company. The method may further comprise checking whether values determined for the predetermined KPI based on at least one of the first data and the second data satisfy the predetermined trigger criterion. The method may further comprise, if the predetermined trigger criterion is satisfied, using an a priori method and/or using an a posteriori method. Using an a priori method may comprise verifying at least one of the platform, an origin of the first data and an origin of the second data. Using an a posteriori method may comprise triggering, by the triggering module, the fleet management application to processing the first data and/or the second data together with additional data processable by the calculation module due to the triggering.

It shall be noted that the trigger module and the corresponding associated predetermined trigger criterion may also be understood as a "trap" having "trap boundaries". For example, in case a KPI has a certain value which is covered by the trigger module or the "trap", i.e. for example the value of the KPI is within a predetermined range of values, the end values of the range may be understood as the predetermined trigger criterion/criteria or as the "trap boundaries". There may be several trigger modules associated with several predetermined KPIs. The process may be a production process, for which raw materials may be required, that are delivered by the second company and the third company. A total emission of CO2 for the production process, within a predetermined time period for example, may be an example for a KPI. Additionally or alternatively, a total energy consumption, a total throughput time or a total rest period may be other examples for further KPIs of a production process. The checking may be a continuous monitoring. The predetermined trigger criterion being satisfied may comprise one of the range's end values being met or reached or one of the "trap boundaries" being violated. Processable due to the triggering may comprise that the additional data were not processable, i.e. not accessible or not usable for example, before the triggering. Hence, the triggering made the additional data processable.

Hence, there is further provided an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with I P-protected applications, in collaboration with third-party data providers.

According to several examples of the present disclosure, the additional data may be provided by the second company and is additional data to the first data, and/or the additional data may be provided by the third company and is additional data to the second data. Additionally, or alternatively, the additional data may be data included in the first data and made accessible for the calculation module due to the triggering and/or the additional data may be data included in the second data and made accessible for the calculation module due to the triggering.

It shall be noted that the additional data may be provided or automatically provided, for example according to predetermined conditions or rules (for example as agreed upon with the corresponding data provider) and according to a predetermined data granularity or predetermined data aggregation level, by the data provider, for example based on a request send by the application. Additionally, or alternatively, the calculation module may switch into another calculation mode, in which the (already available) first data and/or second data are processed and analyzed in a less aggregated manner, i.e., (more) vehicle-specific and/or device-specific information or insights may be gained.

Hence, the autonomous equipment of a fleet may be analysed on a vehicle basis or device basis, so that an individual vehicle or an individual device may be identified to be responsible for the predetermined trigger criterion being met or violated, i.e. to be responsible for the corresponding KPI to deviate from a reference value by more than a predetermined deviation amount for example.

According to several examples of the present disclosure, the predetermined trigger criterion may be at least one of:
- a predetermined deviation amount for a value in time series data associated with the KPI, wherein the predetermined deviation amount is a deviation amount from an average value of a predetermined amount of previous values in the time series data,
- a predetermined upper and/or lower threshold for the values of the KPI, which may correspond to upper and/or lower alarm thresholds for example,
- missing data in time series data for the KPI, which may be an indication for a defective sensor for example,
- values in time series data for the KPI, which have an occurrence frequency above a predetermined upper limit occurrence frequency value, which may be an indication for a defective sensor for example, and
- an anomaly detected for the KPI.

Hence, a detailed data analysis is still enabled.

According to several examples of the present disclosure, the result of the using the a priori method and/or of the using the a posteriori method may be indicative of at least one of:
- a process stage that contributed most to the triggering the fleet management application, for example which truck contributed most to the CO2 value exceeding a predetermined threshold,
- a process lifecycle phase that contributed most to the triggering the fleet management application, for example a raw material cleaning step that contributed to a total water consumption to exceeding a predetermined threshold,
- a predetermined number of most non-sustainable process parts or products that contributed most to the triggering the fleet management application within a production process, for example the heating of a blast furnace,
- a predetermined number of top data points with a highest deviation from an average of a monitoring over a predetermined number of previous days in case of an alarm,
- identities of devices that were related to a raised alarm and that have had the highest spread in measured data, for example smoke sensors in a furnace or pressure and temperature sensors in a boiler,
- a battery state of battery model points at discrete points, for example for a truck battery,
- a predetermined number of most influential layers of a ML model, and
- a recommendation for action based on a confidential ML model, for example to cool down a boiler or to stop a production process.

Hence, a detailed data interpretation is still enabled.

According to a second aspect, there is provided a data processing apparatus for confidentiality-preserving fleet management for automation equipment in industrial plant, the data processing apparatus comprising a processor being configured to carry out the method of the first aspect.

The data processing apparatus according to the second aspect is advantageous in that it may participate in enabling to combining code and data originating from different parties or companies in a secure way. It is further provided technical means to foster and ensure trust between multiple parties, on top of contractual or commercial agreements. Moreover, there is achieved a reduced attack surface as both data and application including an algorithm or model for example are protected by the trusted execution environment. It is further enabled for code and data authenticity and integrity verification through remote and local trusted execution environment attestation. Hence, there is provided a new offering for confidentiality-preserving fleet management for automation equipment in industrial plant based on decentralized confidential data analytics, and it is avoided leakage of IP of a protected algorithm or model. Furthermore, there is enabled protection for investments including equipment uptime and partners, even in compromised or third-party environments. There is further enabled an easy sharing or provisioning of new software services for customers, secure-by-design, since parties may control their code or data for example. There is further enabled that the platform may be provided by a platform provider party, wherein two other parties might be the application provider party and the data provider party. Hence, it is enabled that an independent, neutral or unbiased party runs or provides the platform for multi-party fleet management using trusted computing. Hence, trust of the other two parties, i.e. the application provider party and the data provider party, may be even further increased. In particular, trust of the application provider party and the data provider party would be further increased, since the application provider party and the data provider party would rather trust the system, i.e. the provided platform, than potentially the platform provider party. There is further provided an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with I P-protected applications, in collaboration with third-party data providers.

According to a third aspect, there is a data processing system provided for confidentiality-preserving fleet management for automation equipment in industrial plant. The data processing system comprising a data processing apparatus of the second aspect. Additionally, or alternatively, the data processing system comprises means for carrying out the method of the first aspect.

The data processing system according to the third aspect is advantageous in that it may participate in enabling to combining code and data originating from different parties or companies in a secure way. It is further provided technical means to foster and ensure trust between multiple parties, on top of contractual or commercial agreements. Moreover, there is achieved a reduced attack surface as both data and application including an algorithm or model for example are protected by the trusted execution environment. It is further enabled for code and data authenticity and integrity verification through remote and local trusted execution environment attestation. Hence, there is provided a new offering for confidentiality-preserving fleet management for automation equipment in industrial plant based on decentralized confidential data analytics, and it is avoided leakage of IP of a protected algorithm or model. Furthermore, there is enabled protection for investments including equipment uptime and partners, even in compromised or third-party environments. There is further enabled an easy sharing or provisioning of new software services for customers, secure-by-design, since parties may control their code or data for example. There is further enabled that the platform may be provided by a platform provider party, wherein two other parties might be the application provider party and the data provider party. Hence, it is enabled that an independent, neutral or unbiased party runs or provides the platform for multi-party fleet management using trusted computing. Hence, trust of the other two parties, i.e. the application provider party and the data provider party, may be even further increased. In particular, trust of the application provider party and the data provider party would be further increased, since the application provider party and the data provider party would rather trust the system, i.e. the provided platform, than potentially the platform provider party. There is further provided an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with IP-protected applications, in collaboration with third-party data providers.

According to a fourth aspect, there is provided an industrial plant comprising a data processing apparatus of the second aspect and/or a data processing system of the third aspect.

By "industrial plant", according to several examples, it may be meant an industrial plant, industrial production plant or industrial resource plant like a mine for example, comprising one or more pipelines, production lines and/or assembly lines for transforming one or more educts into a product and/or for assembling one or more components into a final product for example. According to several examples, it may be meant an industrial plant in which data from third parties are processed for processing the transforming and/or the assembling. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to combining code and data originating from different parties or companies in a secure way. It is further provided technical means to foster and ensure trust between multiple parties, on top of contractual or commercial agreements. Moreover, there is achieved a reduced attack surface as both data and application including an algorithm or model for example are protected by the trusted execution environment. It is further enabled for code and data authenticity and integrity verification through remote and local trusted execution environment attestation. Hence, there is provided a new offering for confidentiality-preserving fleet management for automation equipment in industrial plant based on decentralized confidential data analytics, and it is avoided leakage of IP of a protected algorithm or model. Furthermore, there is enabled protection for investments including equipment uptime and partners, even in compromised or third-party environments. There is further enabled an easy sharing or provisioning of new software services for customers, secure-by-design, since parties may control their code or data for example. There is further enabled that the platform may be provided by a platform provider party, wherein two other parties might be the application provider party and the data provider party. Hence, it is enabled that an independent, neutral or unbiased party runs or provides the platform for multi-party fleet management using trusted computing. Hence, trust of the other two parties, i.e. the application provider party and the data provider party, may be even further increased. In particular, trust of the application provider party and the data provider party would be further increased, since the application provider party and the data provider party would rather trust the system, i.e. the provided platform, than potentially the platform provider party. There is further provided an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with I P-protected applications, in collaboration with third-party data providers.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computing system can typically be a processor, for example a processor that is part of a computer.

The computer-readable medium according to the fifth aspect is advantageous in that it may participate in enabling to combining code and data originating from different parties or companies in a secure way. It is further provided technical means to foster and ensure trust between multiple parties, on top of contractual or commercial agreements. Moreover, there is achieved a reduced attack surface as both data and application including an algorithm or model for example are protected by the trusted execution environment. It is further enabled for code and data authenticity and integrity verification through remote and local trusted execution environment attestation. Hence, there is provided a new offering for confidentiality-preserving fleet management for automation equipment in industrial plant based on decentralized confidential data analytics, and it is avoided leakage of IP of a protected algorithm or model. Furthermore, there is enabled protection for investments including equipment uptime and partners, even in compromised or third-party environments. There is further enabled an easy sharing or provisioning of new software services for customers, secure-by-design, since parties may control their code or data for example. There is further enabled that the platform may be provided by a platform provider party, wherein two other parties might be the application provider party and the data provider party. Hence, it is enabled that an independent, neutral or unbiased party runs or provides the platform for multi-party fleet management using trusted computing. Hence, trust of the other two parties, i.e. the application provider party and the data provider party, may be even further increased. In particular, trust of the application provider party and the data provider party would be further increased, since the application provider party and the data provider party would rather trust the system, i.e. the provided platform, than potentially the platform provider party. There is further provided an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with IP-protected applications, in collaboration with third-party data providers.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to combining code and data originating from different parties or companies in a secure way. It is further provided technical means to foster and ensure trust between multiple parties, on top of contractual or commercial agreements. Moreover, there is achieved a reduced attack surface as both data and application including an algorithm or model for example are protected by the trusted execution environment. It is further enabled for code and data authenticity and integrity verification through remote and local trusted execution environment attestation. Hence, there is provided a new offering for confidentiality-preserving fleet management for automation equipment in industrial plant based on decentralized confidential data analytics, and it is avoided leakage of IP of a protected algorithm or model. Furthermore, there is enabled protection for investments including equipment uptime and partners, even in compromised or third-party environments. There is further enabled an easy sharing or provisioning of new software services for customers, secure-by-design, since parties may control their code or data for example. There is further enabled that the platform may be provided by a platform provider party, wherein two other parties might be the application provider party and the data provider party. Hence, it is enabled that an independent, neutral or unbiased party runs or provides the platform for multi-party fleet management using trusted computing. Hence, trust of the other two parties, i.e. the application provider party and the data provider party, may be even further increased. In particular, trust of the application provider party and the data provider party would be further increased, since the application provider party and the data provider party would rather trust the system, i.e. the provided platform, than potentially the platform provider party. There is further provided an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with I P-protected applications, in collaboration with third-party data providers.

According to a seventh aspect, there is provided a use of at least one of a data processing apparatus of the second aspect, a data processing system of the third aspect, an industrial plant of the fourth aspect, a computer-readable medium of the fifth aspect, and/or a computer program product of the sixth aspect.

The use according to the seventh aspect is advantageous in that it may participate in enabling to combining code and data originating from different parties or companies in a secure way. It is further provided technical means to foster and ensure trust between multiple parties, on top of contractual or commercial agreements. Moreover, there is achieved a reduced attack surface as both data and application including an algorithm or model for example are protected by the trusted execution environment. It is further enabled for code and data authenticity and integrity verification through remote and local trusted execution environment attestation. Hence, there is provided a new offering for confidentiality-preserving fleet management for automation equipment in industrial plant based on decentralized confidential data analytics, and it is avoided leakage of IP of a protected algorithm or model. Furthermore, there is enabled protection for investments including equipment uptime and partners, even in compromised or third-party environments. There is further enabled an easy sharing or provisioning of new software services for customers, secure-by-design, since parties may control their code or data for example. There is further enabled that the platform may be provided by a platform provider party, wherein two other parties might be the application provider party and the data provider party. Hence, it is enabled that an independent, neutral or unbiased party runs or provides the platform for multi-party fleet management using trusted computing. Hence, trust of the other two parties, i.e. the application provider party and the data provider party, may be even further increased. In particular, trust of the application provider party and the data provider party would be further increased, since the application provider party and the data provider party would rather trust the system, i.e. the provided platform, than potentially the platform provider party. There is further provided an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with I P-protected applications, in collaboration with third-party data providers.

Optional features of the first aspect may form part of any of the second to seventh aspects, mutatis mutandis.

The method of the first aspect may be at least in parts computer implemented.

The computer-readable medium of the fifth aspect may have stored thereon the computer program product of the sixth aspect.

The term "obtaining", as used herein, may comprise, for example, receiving from another system, apparatus, or process; receiving via an interaction with a user; loading or retrieving from storage or memory; measuring or capturing using sensors or other data acquisition apparatuses.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a schematic example application of fleet management for a mine with trucks by multiple truck vendors, and a software platform protecting both the application as well as the data of different data providers from each other, according to several examples of the present disclosure;
- Figure 2 schematically illustrates an architectural drawing, how a confidential algorithm can work with confidential data of multiple products of different vendors in a trusted execution environment, according to several examples of the present disclosure;
- Figure 3 illustrates a schematic drawing showing a sequence of events that may happen in case of a deviation;
- Figure 4 illustrates a flowchart indicative of a method according to several examples of the present disclosure; and
- Figure 5 shows a block diagram schematically illustrating a data processing apparatus according to several examples of the present disclosure.

### DETAILED DESCRIPTION

In industrial use cases involving multiple parties with (partially) different business interests, collaboration and data sharing is hard to achieve, for example due to confidentiality reasons of the data, which typically can serve multiple purposes, such as fleet management and asset management.

Moreover, in such context, applications may be used that keep original data confidential and protected to the owner of the data, while providing aggregated or selected data items to higher-level users. This, for instance, as not being limited to confidential computing applications, applies to Digital Twin / Industry 4.0 domain, with partial models being confidential and only accessible to the owner while providing access to aggregated or selected data to other partial models or lifecycle roles.

For applications keeping original data confidential and protected to the owner of the data, while providing aggregated or selected data items to higher-level users, an application area is, for example, sustainability dashboards that show the end customer aggregated values like usage of ROHS material or CO2 consumption of the entire automation systems, building on a potentially long supply chain of information down to the individual material or each and every manufacturing step from material to full automation system. Other examples might be CO2 emission tracking, which can, for instance, be based on digital twin submodels. Finally, industrial platforms like streaming calculation engines (Edgenius streaming calculation engine as a mere nonlimiting example according to a plurality of possible alternative examples), which offer executing custom algorithms and applications, also benefit from aggregating data, while not disclosing the original data. Accordingly, such as a fleet management application for heterogeneous mobile mining equipment provided by company A for example to manage energy optimally but such company A neither being allowed to see vendors' battery state nor battery model. However, there is a risk or possibility that battery models are defective or wrong and lead to poor power management decisions and trucks get stuck with an empty battery.

In all these examples, algorithms and/or models could be protected, i.e., kept confidential in addition to the data, meaning that multiple parties can rely on confidentiality guarantees while still being interested in the potential to have additional traceability and root cause analysis in case of deviations from expected behavior.

Confidential computing is one potential technology to be applied to achieve confidentiality of applications and/or data by running sensitive applications or processing sensitive data within a trusted execution environment with isolated execution environments and encrypted memory. This may require dedicated hardware like ARM TrustZone for embedded, mobile and server devices or Intel SGX for server devices, for example, and can be combined with further technologies such as remote attestation. Confidential computing is primarily being used by cloud providers such as Amazon, Google, IBM, and Microsoft, as well as for Digital Rights Management (DRM) solutions of streaming services such as Netflix or Blu-ray content protection, where code and data typically originate from the same source. Alternatively, standard IT security means might be applied, for example, to encrypt data or to sign algorithms in order to achieve integrity of the executed applications.

In a setup with multiple parties, however, such IP-protected applications might comprise algorithms or models that are business-critical for the providing party, and data to be processed that is business-critical for another providing party, i.e., it shall not be exposed as original data to the party running an application.

In case confidential computing technology is used by a provider of an application in order to protect sensitive applications, still the application itself might run into unexpected states or show abnormal or unexpected conditions or results. Frequency of such occasions can vary from very rare up to regular intervals, depending on the actual trigger for these abnormal or unexpected conditions. In such case, the user of an application might want to perform a root cause analysis to identify and mitigate or solve the underlying issue causing the abnormal or unexpected conditions. However, the user of an application is not able to do such analysis, as the execution of the application - and therefore all detailed information - is protected by the trusted execution environment. On the other hand, the provider of an application might want to support the user in such cases but cannot easily provide access to specific information, as the provider(s) of the data keep their models and data confidential in the trusted execution environment due to the protection by the trusted execution environment.

Hence, in view of the problems as outlined above, for solving at least part of these problems, there is provided according to several examples of the present disclosure, a platform, for example, running on Cloud, mobile edge, edge, or industrial controller, which may execute, for example, a fleet management algorithm to control a fleet of automation equipment, like trucks from multiple vendors. In such setup with multiple parties, applications might comprise a fleet management calculation module, which may comprise algorithms or models that are business-critical for the application provider, and data, like first data and second data associated with, provided by or received from respectively second and third companies, to be processed that is business-critical for the data providers for example the different companies, i.e., it shall not be exposed as original data to the party, for example a first company, running an application (or a platform comprising the application, which includes a fleet management calculation module for example).

Therefore, according to several examples of the present disclosure, the platform may ensure by hardware support that both data and algorithm cannot be accessed by the other parties, i.e., further to the above-indicated example, the application provider (for example a first company) does neither see battery state nor battery model but manages energy optimally, while also the different vendor's data (for example first data indicative of information about a first fleet of automation equipment associated with a second company and second data indicative of information about a second fleet of automation equipment associated with a third company) and model can only be accessed by the original data provider. Another benefit beyond such collaboration with heterogeneous equipment is that in case of cyber-attacks, likelihood of the application being affected by the attack significantly decreases due to the protected environment, which in turn improves uptime of equipment, like mining equipment for example, and operation.

Moreover, according to several examples of the present disclosure, to further allow for traceability and root cause analysis, the present disclosure provides (partial) insights into applications and data that is confidentiality-protected by, for example, trusted execution environments or other IT security measures. This allows to explain or understand a specific application behavior or application results, especially in case of deviations from expected behavior or results, as well as to take appropriate corrective actions in the industrial process, despite preserving data in encrypted state for example and without exposing original cleartext data. As original data may not be exposed, insights might be limited to some extent.

Means to achieve such traceability can be integrated into an application, like a fleet management calculation module, which may be at least one of a fleet management algorithm, a mathematical model for fleet management, a physical model for fleet management and a machine learning/artificial intelligence (ML/AI) model for fleet management, as (1) a-priori verifications, or to allow (2) a-posteriori inspections. With the former (i.e. a-priori verifications), involved partners can, for example, verify that legitimate models (e.g., AI/ML, mathematical or physical models) are used by the applications. With the latter (i.e. a-posteriori inspections), additional information and insights, for example, dis-aggregated values or most significant outliers, can be shared in case specific "trap conditions" are met, such as a key performance indicator (KPI) being outside of a pre-defined range, i.e. violates the pre-defined range (at a first end or second end of the range) or an asset malfunctioning. Such mechanisms may need to be pre-engineered and will not simply expose original data. With such additional information and insights, industrial processes can be steered back to normal behavior while preserving data confidentiality.

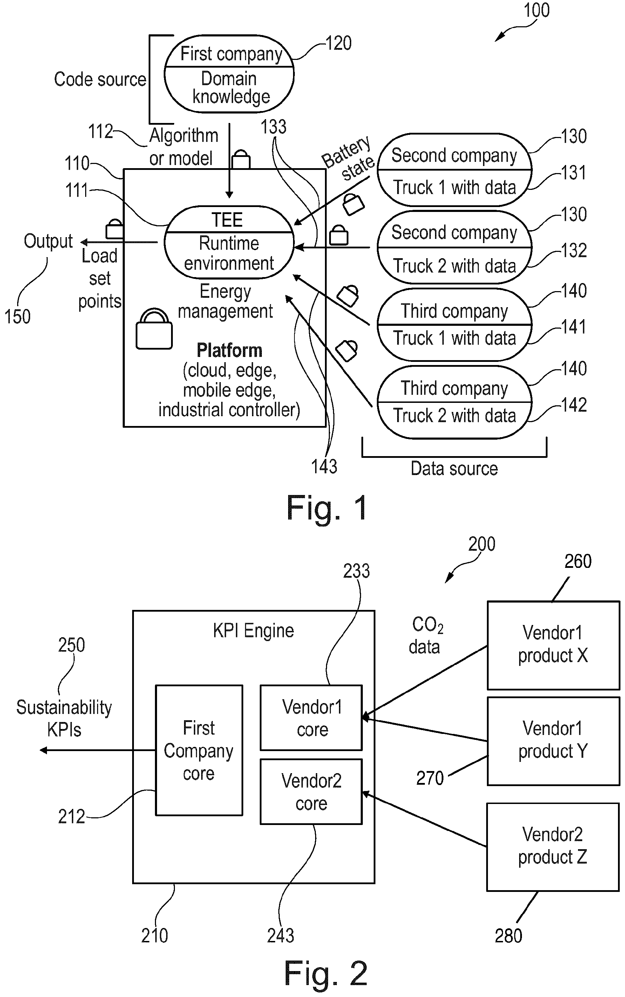

Hence, in view of the above, according to several examples of the present disclosure and outlined in more detail, there is provided a platform, for example, running on Cloud, mobile edge, edge, or industrial controller, that securely combines code and data originating from different parties, executing for example a fleet management algorithm to control a fleet of trucks from multiple vendors. In such setup with multiple parties, applications might comprise algorithms or models that are business-critical for the application provider, and data to be processed that is business-critical for the data providers, i.e., it shall not be exposed as original data to the party running an application. Therefore, the platform as provided according to several examples of the present disclosure may ensure by hardware and software support that both data and algorithm cannot be accessed by the other parties, i.e., the application provider does neither see battery state nor battery model of battery-equipped trucks in a fleet of trucks for example, but manages energy optimally, while also the different vendor's data and model can only be accessed by the original data provider. This is schematically indicated in Figure 1.

In particular, Figure 1 illustrates, according to several examples of the present disclosure, a schematic example application of fleet management. Figure 1 illustrates a system 100, which shows a platform 110 comprising a TEE 111, a first company 120, a second company 130 and a third company 140. The first company 120 provides a calculation module 112, for example an algorithm and/or model, to be available within the TEE 111. The second company 130 may be a vendor of trucks for example, and a fleet of the second company 130 may comprise the trucks 131 and 132. The second company 130 inputs first data 133 into the TEE 111. The first data 133 comprise for example information about the fleet of trucks of the second company 130 and individual information about any of the trucks 131 and 132. The third company 140 may be another vendor of trucks for example, and a fleet of the third company 140 may comprise the trucks 141 and 142. The third company 140 inputs second data 143 into the TEE 111. The second data 143 comprise for example information about the fleet of trucks of the third company 140 and individual information about any of the trucks 141 and 142. Inside the TEE 111, the calculation module 112 processes the first data 133 and the second data 143, for example one after the other, jointly, simultaneously or in dependencies to each other. As graphically indicated in Figure 1 by the padlocks, the second and third companies 130 and 140 for example are not enabled to access or obtain the software code/code structure of the calculation module 112. Further, the first and second companies 120 and 130 for example are not enabled to access or obtain the second data 143. Furthermore, the first and third companies 120 and 140 for example are not enabled to access or obtain the first data 133. After the calculation performed by the calculation module 112, the TEE 111 outputs a result 150, which is further output from the platform 110. For example, the schematic example application of fleet management according to Figure 1 may be an example for a mine with trucks by multiple truck vendors (second company 130 and third company 140), and a software platform (platform 110) protecting both the application (application including the calculation module 112) as well as the data (first data 133 and second data 143) of different data providers (second company 130 and third company 140) from each other. However, it shall be noted that the truck vendors may be different from the data providers. For example, different data providers may have or use trucks from a same truck vendor. Additionally, or alternatively, a data provider may have or use trucks from several different truck vendors.

Additional means on top of using hardware support to create protected trusted execution environments may need to be applied in order to further increase trust of all involved parties and avoid potential misuse, such as application provider for example having some code in its application that sends data or aggregated data to the outside of the trusted execution environment or data provider to manipulate data in a way to be able to extract knowledge of the algorithm by knowing the inputs and watching the outputs.

According to several examples of the present disclosure, one technical approach to implement the platform is to build on a trustworthy and agreed-upon software framework. The software framework may provide a safe environment where algorithms or ML models from application providers may run on data from data providers. The framework may ensure that neither information about algorithms or models nor information about the input data are leaked, as only the output, i.e., the result of the computation on or processing of the input data, is emitted by the framework (or by the platform). However, a rogue application provider may use a malicious reversible algorithm and observe the output from the framework or platform to learn the sensitive input of the data provider. To protect against this, according to several examples of the present disclosure, (i) the output can be encrypted to restrict its accessibility to a specific party, such as a customer, who is in possession of the decryption key, and/or (ii) reversible algorithms or models are by design of the framework impossible to execute or are being prevented from being executed by the framework.

Similarly, according to several examples of the present disclosure, a rogue data provider may feed malicious input and observe the output to learn sensitive algorithms. To protect against this, an output from the trusted execution environment or platform may be encrypted, thus unobservable, or anti-reverse-engineering techniques may be used. In this regard, anti-reverse-engineering techniques may be protection modules that are equipped to the input interface and/or the output interface of the trusted execution environment. Examples for such input protection modules may be input range limiting, input rate limiting, verification of source, verification of input frequency, encoding semantics filter or input value blocker. Examples for such output protection modules may be output rate limiting, fuzzifying outputs, output encryption.

To establish trust in the framework, all participating parties may know and approve the software framework beforehand. For this purpose, the software framework may, for example, be open-sourced so that everyone can reproduce its way of functioning and assure themselves that no sensitive IP or data might be leaked. In addition, the software framework may always be executed within a trusted execution environment and its authenticity can be verified by remote attestation. Using remote attestation, all participating parties may ensure that indeed the known-good framework runs inside the respective software trusted execution environment. Then, application and data providers may start loading their sensitive IP and data inside the framework and use the framework in operation.

Nevertheless, according to several examples of the present disclosure, there are multiple other technical approaches to implement the platform, wherein the multiple other technical approaches can also be combined with each other. These approaches include at least one of the following examples without being limited thereto:
- Using smart contracts, which may document every execution cycle of the trusted execution environment in an immutable and transparent way. Such a smart contract could, for example, contain the executed algorithm (e.g., by description, name, cryptographic hash, execution start, run duration), the used data (e.g., by source, classification, cryptographic hash, timestamp), and the result (e.g., by value, cryptographic hash).
- Zero knowledge proofs, which may verify a priori program code and data without publishing the actual contents.
- Nested enclaves or nested trusted execution environments, for example, with the algorithm being the interior trusted execution environment ensuring a pre-validated and benign information flow for the result output while preventing unwanted or unknown additional communication to the outside of the trusted execution environment.

Furthermore, according to several examples of the present disclosure, the present disclosure builds on the idea of embedding warning elements or "traps" ("traps" as used further below) into the algorithm or platform running models, such as AI/ML, mathematical, or physical models. The algorithm, platform, or model itself is designed to provide additional insights into the data in case a trap hits, for example, in case some KPI is outside of pre-defined boundaries. The additional insights may need to be fine-grained enough to be able to take further actions in the sense of steering a technical process back toward normal behavior. However, they need to be protective enough not to leak the original data, which may need to remain confidential in any case.

While the approach of traps may allow partial root cause analysis or action recommendation a-posteriori, i.e., after a deviation happened, these might be combined with additional a-priori methods ensuring a higher level of trust into the information, such as zero-knowledge proof or remote attestation methods verifying that the model of sub-suppliers or partners used is valid without the sub-supplier or partner having to reveal the model itself.

According to several examples of the present disclosure, an example for a trap or warning element could be that the CO2 emission KPI in a sustainability dashboard of a production process is too high. This trap could be triggered in two ways: first, using an a priori method or, second, using an a posteriori method. In case of an a priori method, for example, with zero-knowledge proofs any sensors of the platform using invalid models or that need to be (re-)calibrated may get flagged. Similarly, remote attestation could be used to verify the origin of data, the integrity of assets and the platform processing the data.

In case of an a posteriori method, a trap may fire or become active, triggering the algorithm (or the fleet management calculation module) to provide insights into directions to further investigate. There are various examples for such traps. Some of them will are listed and briefly explained in the following as an example only without being limited thereto. Depending on the algorithm's or data's individual protection needs and characteristics, selected traps might be applied. Which of the traps will be applied may be subject to pre-configuration of the confidentiality-protected execution environments, such as trusted execution environments or encryption. The pre-configuration may comprise both, the boundaries for a trap to fire, as well as the aggregated data that is allowed to be revealed in case the trap fires.

Examples for "trap boundaries" are the following:
- A specific value, for example, CO2 emission KPI in a sustainability dashboard of a product process, may statistically deviate from previous values, for example, 10% from average of the last 24 hours.
- A specific value may be higher or lower than pre-defined boundary values or (upper/lower) thresholds, for example, a boiler temperature increases above 80°C or decreases below 30°C.
- Time-series data analysis to detect outliers. For example, missing data or too frequent data may indicate an issue with a broken sensor or actor (of the platform for example).
- Anomaly detection, where correlations between multiple values may indicate an issue. For example, normally temperate and pressure values both increase and
decrease together. A trap may fire when the temperature increases while the pressure decreases, and vice versa.

Examples for "trap actions" are the following:
- Revealing a process stage that contributed most to firing of the trap, such as a process stage having consumed most CO2 within the last hour, for example, in case CO2 emission tracking fires the trap.
- Revealing a process lifecycle phase that contributed most to firing of the trap, such as the lifecycle phase having failed the most in terms of sustainability KPIs.
- Revealing the, for example, three most non-sustainable process parts or products that contributed most to firing of the trap within a production process.
- Revealing the top, for example, the (aggregated) data points with highest deviation from average of, for example, last week's monitoring in case of an alarm.
- Revealing the identities of those devices that were related to a raised alarm and that have had the highest spread in measured data.
- Revealing battery state of battery model points at discrete points in time after a battery-related issue occurred, in order to allow a rough double-checking of these values against expected data, for instance, in case of energy management for mobile mining equipment.
- Revealing the, for example, five most influential layers of a ML model in case of an issue, having for instance predicted energy management for the last charging decisions.

Such "trap actions" may allow some first insights into the deviations of a normal "blackbox" monitoring, enabling to take further actions depending on the granularity of information released by the trap.

Instead of providing further data insights, an a-posteriori trap could also provide action recommendations based on a confidential ML model. This means, the confidential ML model would not reveal any of the confidential data while allowing to take action based on previously learned corrective actions in cases of similar deviations.

Referring now to Figure 2, Figure 2 schematically shows an architectural drawing or system 200, how a confidential algorithm, which is for example included in a "First company core" 212 provided by a first company and comprises the calculation module 112, can work with confidential data (e.g., provided in "Vendor1 core" 233 comprising first data 133 according to Figure 1 for example, and provided in "Vendor2 core" 243 comprising second data 143 according to Figure 1 for example) of multiple products of different vendors (e.g., for the second company 130, "Vendor1 Product X" 260 or "Vendor1 Product Y" 270; e.g., for the third company 140, "Vendor2 Product Z" 280) in a trusted execution environment, for example the TEE 111 according to Figure 1, providing a KPI engine 210 that feeds KPIs or sustainability KPls 250 into a customer dashboard. Said in other words, data provided in the Vendor1 core 233 may be at least part of the data Vendor1 product X 260 and/or of the data Vendor1 product Y 270 (for example provided CO₂ data as indicated in Figure 2), wherein data provided in the Vendor2 core 243 may be at least part of the data Vendor2 product Z 280. Vendor1 product X 260 may represent data associated with a product X, Vendor1 product Y 270 may represent data associated with a product Y, Vendor2 product Z 280 may represent data associated with a product Z. The KPI engine 210 may represent such platform 110 according to Figure 1. Hence, said in other words, the first company core (data) 212, the Vendor1 core (data) 233 and the Vendor2 core (data) 243 may be protected by/provided in a TEE, for example such TEE 111 as outlined above with reference to Figure 1. The sustainability KPIs 250 may represent such output 150 according to Figure 1, and can be calculated without exposing the data due to the confidential environment, such as a trusted execution environment.

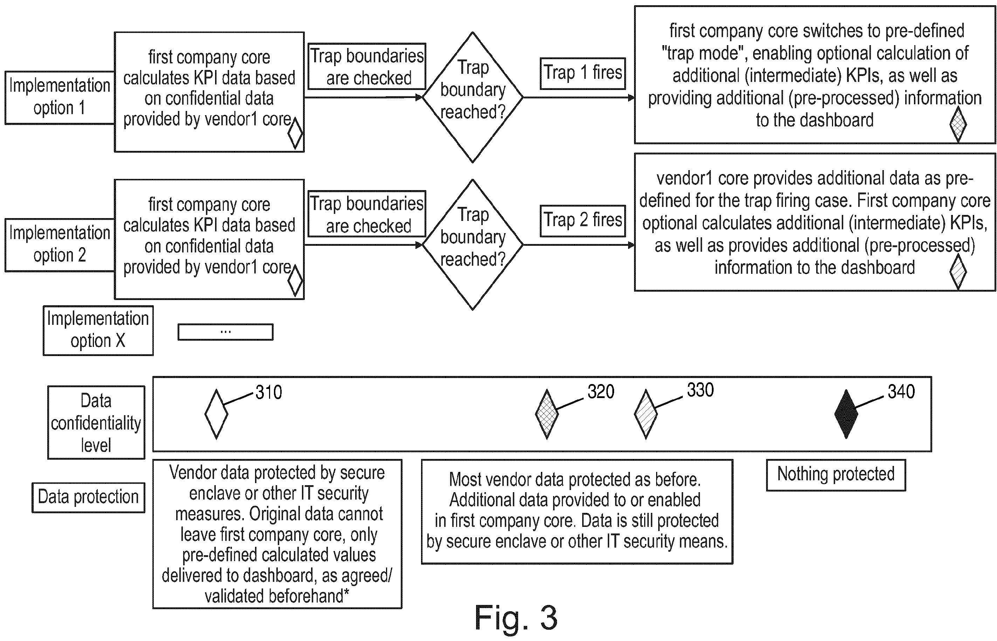

Referring now to Figure 3, Figure 3 illustrates a schematic drawing showing a sequence of events that may happen in case of a deviation for calculated KPI values, such as an issue or alarm raised for a monitored KPI, or a deviation from a predefined trap boundary or reference KPI value for example. The process, i.e. a processing of the data provided by the data providers (for example the data 260 and 270 provided by the second company 130 as illustrated according to Figure 2 or the data 280 provided by the third company 140 as illustrated according to Figure 2) by use of the application or calculation module (for example as provided by the first company in the First Company core 212 as illustrated according to Figure 2), may run in normal mode with full data protection. Said in other words, a processing of the data provided by the data providers by use of the application or calculation module, for example the processing of the first data 133 and the second data 143 provided by the second and third companies 130 and 140 through the calculation module 112 provided by the first company 120 as schematically illustrated in Figure 1, may run in normal mode with full data protection. The normal mode may also be understood as an initial mode or a first state. In Figure 3, different data confidentiality levels are indicated by different rhombuses, wherein an unpatterned rhombus 310 represents full data protection, a tiled rhombus 320 represents less data protection as compared with the unpatterned rhombus 310, a striped rhombus 330 represents less data protection as compared with the tiled rhombus 320, and a black rhombus 340 represents no data protection. In normal mode, KPI data for example may be calculated with full or highest data protection based on confidential data provided by the different companies or vendors. During normal mode predefined threshold values, trap boundaries or trigger criteria are continuously checked, and in case a threshold value is violated, a trap boundary is reached or a trigger criterion is satisfied (e.g., an alarm is issued, or a deviation for a determined value from an average value comprising a predetermined amount of directly preceding values has reached 10% or more), the respective trap fires or is activated. Then, additional data is accessible by the calculation module, for example, either as the Vendor1 core 233 or the Vendor2 core 243 as illustrated in Figure 2, provides (or make available) additional data or as the calculation module in the First Company core 210 switches to a trap mode, which may represent a second mode or second state (i.e. the calculation module may switch from a first state into a second state for example, wherein the first state may be understood as an initial mode or normal mode and wherein the second state may be understood as the trap mode or as a mode for more detailed data processing by using data on a less aggregated level/by using data with increased data exposure level) for using additional data. In this case, as indicated in Figure 3 by rhombuses 320 and 330, most vendor data including all original data is still protected, while data exposure level to the calculation module slightly increases due to the access to additional data. Depending on the specific trap, data exposure level to the calculation module might differ, i.e., more or less additional data might be provided to First Company core 212.

Hence, according to several examples of the present disclosure, an amount and/or a granularity and/or a data exposure level of the additional data is based on the trap (the trap's configuration) or trigger module (trigger module's configuration). It shall be noted that still all data (i.e. original data plus additional data) is protected, and there is no situation that leads to a situation that all data is exposed or data protection for confidentiality is not given.

According to several examples of the present disclosure, based on particular needs of the application (e.g., data owner and vendor relationship) the traps which may be implemented in the KPI engine 212 or in the calculation module 112 for the particular use-cases may need to be defined in-advance and agreed between the parties. The definition of "traps" can be expressed either in natural language or using some machine-readable constraints to simplify the logic following the trap firing. Furthermore, trap actions may need to be aligned in advance in a technical and possibly also legal "contract", for example, deciphering parts of data of the data owner in an automatic or semi-automatic (e.g., with a human-approvement) step.

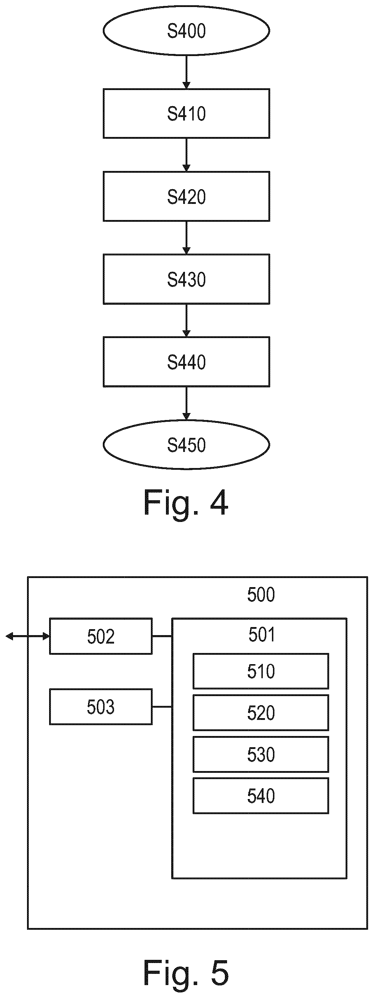

Referring now to Figure 4, Figure 4 illustrates a flowchart indicative of a method according to several examples of the present disclosure. The method is a method for confidentiality-preserving fleet management for automation equipment in industrial plant.

The method starts in S400.

In S410, the method comprises providing a platform comprising a fleet management for automation equipment application within a trusted execution environment, TEE. The fleet management for automation equipment application comprises a calculation module and is associated with a first company. The platform may be such platform as outlined above with reference to Figures 1 to 3. Further, the calculation module may be such algorithm or module as outlined above with reference to Figures 1 to 3. The first company may be such data provider as outlined above with reference to Figures 1 to 3.

In S420, the method comprises receiving first data indicative of information about a first fleet of automation equipment associated with a second company, the receiving at the fleet management for automation equipment application within the TEE. The first data may be vendor data as outlined above with reference to Figures 1 to 3, the first fleet of automation equipment may be a fleet of trucks of the vendor as outlined above with reference to Figures 1 to 3, and the second company may be the vendor as outlined above with reference to Figures 1 to 3.

In S430, the method comprises processing the first data by using the calculation module.

In S440, the method comprises outputting from the TEE a result of the processing The method ends in S450.

Referring now to Figure 5, Figure 5 shows a block diagram schematically illustrating a data processing apparatus 500 according to several examples of the present disclosure. In particular, according to several examples of the present disclosure, there is provided a data processing apparatus 500 for confidentiality-preserving fleet management for automation equipment in industrial plant. The data processing apparatus 500 comprises a processor 501 being configured to carry out the method of Figure 4.

In more detail, according to various examples, a data processing apparatus 500 being configured to carry out the method of Figure 4 may comprise a processing circuitry, a processing function, a processing means, a processing unit or a processor 501, which enables the data processing apparatus 500 to participate in confidentiality-preserving fleet management for automation equipment in industrial plant. The processor 501 may comprise one or more processing portions or functions, wherein the processing portions or functions may be provided as one or more physical or virtual entities. The data processing apparatus 500 may comprise one or more communication interfaces 502. The data processing apparatus 500 may further comprise a memory or memory unit 503 for storing data, programs and/or instructions to be executed by the processor. The memory 503 may be a memory internal to the data processing apparatus 500 or may be a memory external to the data processing apparatus 500, for example at a cloud server. The processor 501 may comprise one or more portions, which enable the data processing apparatus 500 to execute the method of Figure 4 for example.

According to several examples of the present disclosure, a providing portion 510 may be configured to perform such providing according to S410 of Figure 4. Further, a receiving portion 520 may be configured to perform such receiving according to S420 of Figure 4. Moreover, a processing portion 530 may be configured to perform such processing according to S430 of Figure 4. An outputting portion 540 may be configured to perform such outputting according to S440 of Figure 4.

According to several examples of the present disclosure, the respective portions of the data processing apparatus 500 may also be understood as means for carrying out the certain function.

According to several examples of the present disclosure, there is provided a data processing system for confidentiality-preserving fleet management for automation equipment in industrial plant. The data processing system comprises the data processing apparatus 500 according to Figure 5 and/or comprises means for carrying out the method according to Figure 4. The data processing system may be such system 100 as illustrated according to Figure 1 and/or such system 200 as illustrated according to Figure 2.

According to several examples of the present disclosure, there is provided an industrial plant comprising the data processing apparatus 500 according to Figure 5 and/or the data processing system as outlined above.

According to several examples of the present disclosure, there is provided a computer-readable medium comprising instructions which, when executed by a computing system, causes the computing system to perform the method according to Figure 4. The computer-readable medium may be transitory or non-transitory, volatile or non-volatile.

According to several examples of the present disclosure, there is provided a computer program product comprising instructions which, when executed by a computing system, enable or cause the computing system to perform the method according Figure 4. The computer program product may comprise a computer-readable medium comprising instructions of the computer program product. The computer-readable medium as mentioned above may have stored thereon the computer program product.

According to several examples of the present disclosure, there is provided a use of the data processing apparatus 500, the data processing system as outlined above, the industrial plant as outlined above, the computer-readable medium as outlined above and/or the computer program product as outlined above.

The method according to Figure 4 may be at least in parts computer implemented.

Optional features of the method according to Figure 4 may form part of the data processing apparatus 500, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for confidentiality-preserving fleet management for automation equipment in industrial plant, the method comprising:
providing (S410) a platform (110) comprising a fleet management for automation equipment application within a trusted execution environment, TEE, (111) wherein the fleet management for automation equipment application comprises a calculation module (112) and is associated with a first company (120);
receiving (S420) first data (133) indicative of information about a first fleet of automation equipment (131, 132) associated with a second company (130) at the fleet management for automation equipment application within the TEE (111);
processing (S430) the first data (133) by using the calculation module (112); and
outputting (S440) from the TEE (111) a result (150) of the processing.

2. The method according to claim 1, further comprising
receiving second data (143) indicative of information about a second fleet of automation equipment (141, 142) associated with a third company (140) at the fleet management for automation equipment application within the TEE (111);
processing the second data (143) by using the calculation module (112), wherein the processing the second data (143) comprises at least one of:
processing the second data (143) separately from the first data (133),
commonly processing the first data (133) and the second data (143), and
processing the second data (143) depending on the first data (133); and
outputting from the TEE (111) a result (150) of the processing of the first data (133) and the second data (143).

3. The method according to claim 1 or 2, wherein the first data comprises data for one or more automation equipment among the first fleet of automation equipment, wherein the second data comprises data for one or more automation equipment among the second fleet of automation equipment.

4. The method according to any of claims 1 to 3, wherein the calculation module is at least one of a fleet management algorithm, a mathematical model for fleet management, a physical model for fleet management and a machine learning/artificial intelligence, ML/Al, model for fleet management.

5. The method according to any of claims 1 to 4, further comprising:
building the platform on a software framework and configuring the software framework that outputs from the TEE are results obtained from the fleet management for automation equipment application; and/or
building the platform on a software framework that is designed to allow as output from the platform only results from the processing; and/or
building the platform on a software framework that comprises means for preventing reversible algorithms or models to be executed by the software framework; and/or
building the platform on a software framework that comprises means for preventing reverse engineering algorithms or models by the software framework.

6. The method according to any of claims 1 to 5, further comprising: encrypting a result obtained from the processing, wherein the outputting comprises outputting a result from the encrypting.

7. The method according to any of claims 1 to 6, further comprising: using a smart contract that immutably documents the receiving, the processing and/or the outputting.

8. The method according to any of claims 1 to 7, further comprising: using zero knowledge proofs, that verify a priori program code of the fleet management for automation equipment application, of the calculation module, of the first data and/or of the second data without publishing the contents.

9. The method according to any of claims 1 to 8, further comprising: using nested TEEs inside the TEE, wherein the calculation module is within the interior TEE of the nested TEEs.

10. The method according to any of claims 1 to 9, further comprising:
incorporating a trigger module associated with a predetermined trigger criterion into the fleet management for automation equipment application, wherein the trigger module is associated with values of a predetermined key performance indicator, KPI, for a process related to at least one of the second company and the third company;
checking whether values determined for the predetermined KPI based on at least one of the first data and the second data satisfy the predetermined trigger criterion; and
if the predetermined trigger criterion is satisfied,
using an a priori method and verifying at least one of the platforms, an origin of the first data and an origin of the second data, and/or
using an a posteriori method and triggering, by the triggering module, the fleet management for automation equipment application to processing the first data and/or the second data together with additional data processable by the calculation module due to the triggering.

11. The method according to claim 10,
wherein the additional data is provided by the second company and/or the third company and is additional data to the first data and/or the second data, and/or
wherein the additional data is data included in the first data and/or in the second data and in made accessible for the calculation module due to the triggering.

12. The method according to claim 10 or 11, wherein the predetermined trigger criterion is at least one of:
a predetermined deviation amount for a value in time series data associated with the KPI, wherein the predetermined deviation amount is a deviation amount from an average value of a predetermined amount of previous values in the time series data,
a predetermined upper and/or lower threshold for the values of the KPI,
missing data in time series data for the KPI,
values in time series data for the KPI, which have an occurrence frequency above a predetermined upper limit occurrence frequency value, and
an anomaly detected for the KPI.

13. The method according to any of claims 10 to 12, wherein the result of the using the a priori method and/or of the using the a posteriori method is indicative of at least one of:
a process stage that contributed most to the triggering the fleet management for automation equipment application,
a process lifecycle phase that contributed most to the triggering the fleet management for automation equipment application,
a predetermined number of most non-sustainable process parts or products that contributed most to the triggering the fleet management for automation equipment application within a production process,
a predetermined number of top data points with a highest deviation from an average of a monitoring over a predetermined number of previous days in case of an alarm,
identities of devices that were related to a raised alarm and that have had the highest spread in measured data,
a battery state of battery model points at discrete points,
a predetermined number of most influential layers of a ML model, and
a recommendation for action based on a confidential ML model.

14. A data processing apparatus (500) for confidentiality-preserving fleet management for automation equipment in industrial plant, the data processing apparatus (500) comprising a processor (501) being configured to carry out the method of any of claims 1 to 13.

15. A computer-readable medium comprising instructions which, when executed by a computing system, cause the computing system to perform the method of any of claims 1 to 13.

16. A computer program product comprising instructions which, when executed by a computing system, enable and/or cause the computing system to perform the method of any of claims 1 to 13.
